(19) Europäisches Patentamt

European Patent Office

Office européen des brevets

(11) Veröffentlichungsnummer: **0 501 111 A1**

# (12) EUROPÄISCHE PATENTANMELDUNG

(21) Anmeldenummer: **92100328.1**

(22) Anmeldetag: **10.01.92**

(51) Int. Cl.5: **A47L 15/42**, B60J 5/06

(30) Priorität: **26.02.91 DE 4106018**

(43) Veröffentlichungstag der Anmeldung:
**02.09.92 Patentblatt 92/36**

(84) Benannte Vertragsstaaten:
**AT BE CH DE ES FR GB IT LI NL SE**

(71) Anmelder: **PREMARK FEG CORPORATION**
**1717 Deerfield Road**
**Deerfield, Illinois 60015(US)**

(72) Erfinder: **Truetsch, Claus**
**Gugishöhe 16**
**W-7630 Lahr(DE)**

(74) Vertreter: **Weber, Dieter, Dr. et al**
**Dr. Dieter Weber, Dipl.-Phys. Klaus Seiffert,**
**Dr. Winfried Lieke, Patentanwälte,**
**Gustav-Freytag-Strasse 25, Postfach 6145**
**W-6200 Wiesbaden 1(DE)**

(54) **Faltbare Tür.**

㉗ Beschrieben wird eine faltbare Tür an der Öffnung eines Maschinengehäuses (41). Die Tür besteht aus einer Obertür (15) und einer Untertür (24), welche über eine diese verbindende Dreheinrichtung (42) mit horizontaler Drehachse (43) wenigstens teilweise zusammenfaltbar sind und von denen die Obertür (15) an ihrem oberen Ende um eine horizontale maschinenfeste Drehachse (16) drehbar ist.

Um das Prinzip an sich bekannter Falttüren aus dem Haushaltsbereich auch bei einer Tür der vorstehend genannten Art im gewerblichen Bereich dadurch anwendbar zu machen, daß durch entsprechende Umgestaltung eine präzise Führung und zuverlässige Handhabung der Türabschnitte gewährleistet werden, wird vorgesehen, daß an der Unterkante der Untertür (24) auf gegenüberliegenden Seiten ein Führungsstift (12) befestigt ist, der vertikal bewegbar in jeweils einer auf gegenüberliegenden Seiten der Maschinenöffnung befindlichen Führungsnut (6) in Eingriff steht, die jeweils vertikal in einer von der Unterkante der Öffnung nach oben bis über die Oberkante der Untertür (24) verläuft, wenn die Tür (15, 24) geschlossen ist, und daß an der Oberkante der Obertür (15) ein horizontaler Halter (17) zur Befestigung von Lagerteilen (18) angebracht ist, durch welche an einer ersten Stelle die horizontale Drehachse (16) der Obertür (15) und an einer zweiten beabstandeten Stelle der obere Bolzen (20) einer Gasfeder verlaufen, deren unteres Ende drehbar an einer maschinenfesten Halterung angeordnet ist.

Fig.7 (A-A)

EP 0 501 111 A1

Faltbare Tür an der Öffnung eines Maschinengehäuses, die aus einer Obertür und einer Untertür besteht, welche über eine diese verbindende Dreheinrichtung mit horizontaler Drehachse wenigstens teilweise zusammenfaltbar sind und von denen die Obertür an ihrem oberen Ende um eine horizontale maschinenfeste Drehachse drehbar ist.

Bekannt sind Geschirrspülmaschinen für Küchengroßbetriebe, Restaurants und dergleichen, bei denen die Waschkammer in einer Reihe von Behandlungskammern angeordnet und von einem Förderband durchzogen ist, auf das man Geschirr und dergleichen aufsetzen kann. Für den seitlichen Zugriff dieser Waschkammer ist eine Öffnung vorgesehen, welche mit einer vertikal hochschiebbaren (zum Öffnen) und herunterschiebbaren (zum Schließen) Tür versehen ist. Die Waschkammer ist in einer für das Bedienungspersonal günstigen Höhe von etwa 1 bis 2 m über dem Boden angeordnet und auch etwa 1,5 m hoch, so daß beim vollständigen Öffnen der Waschkammer dieser bekannten Maschine die Tür über die Oberkante der Maschine weit nach oben heraussteht. Bekannte Maschinen dieser Art benötigen daher einen recht großen Platz nach oben zur Decke des Raumes hin, in welchem die Maschine aufgestellt ist.

Es versteht sich, daß in Altbauten und auch in neueren Gebäuden, in welchen Maschinen verschiedener Arten angeordnet werden sollen, ein derartiger Platz vertikal nach oben hin nicht immer vorhanden ist.

Bei Haushaltsküchenmöbeln ist es auch schon bekannt, Türen zu unterteilen und aufklappbar zu gestalten, wenn aus bedienungstechnischen Gründen ein Öffnen durch Schwenken um vertikale oder horizontale Achsen nicht in Frage kommt; im Falle horizontaler Achsen ein Schwenken nach vorn zu unpraktisch ist und ein Schieben nach oben aus Platzgründen nicht in Frage kommt. Die bei den bekannten Küchenmöbeln verwendeten Falttüren haben kleine Felder und daher geringe Gewichte, so daß mechanische Federn zur Unterstützung der Türbewegung ausreichen und auch nur eine Lagerung an der oberen horizontalen Drehachse der Obertür für ausreichend angesehen wird. Der Fachmann hatte daher bislang die Übertragung solcher klappbarer Türen aus dem Küchenmöbelbereich für Haushalte auf den Bereich gewerblicher Maschinen abgelehnt, insbesondere weil die großen Flächen auch faltbarer Türen an gewerblichen Maschinen in der bisher bekannten Weise nicht eingesetzt werden konnten.

Aufgabe der vorliegenden Erfindung ist es daher, das Prinzip der an sich bekannten Falttür aus dem Haushaltsbereich auch bei einer Tür der eingangs genannten Art im gewerblichen Bereich dadurch anwendbar zu machen, daß durch entsprechende Umgestaltungen eine präzise Führung und zuverlässige Handhabung der Türabschnitte für gute Reinigungsmöglichkeiten bei geringem Höhenbedarf gewährleistet werden.

Diese Aufgabe wird erfindungsgemäß dadurch gelöst, daß an der Unterkante der Untertür auf gegenüberliegenden Seiten je ein sich horizontal erstreckender Führungsstift befestigt ist, der wenigstens vertikal bewegbar in jeweils einer auf gegenüberliegenden Seiten der Öffnung befindlichen Führungsnut in Eingriff steht, die jeweils vertikal in einer von der Unterkante der Öffnung nach oben bis über die Oberkante der Untertür verläuft, wenn die Tür geschlossen ist, und daß an der Oberkante der Obertür ein sich horizontal erstreckender Halter zur Befestigung von Lagerteilen angebracht ist, durch welche an einer ersten Stelle die horizontale Drehachse der Obertür und an einer zweiten beabstandeten Stelle der obere Bolzen einer Gasfeder verlaufen, deren unteres Ende über einen unteren Bolzen drehbar an einer maschinenfesten Halterung angeordnet ist.

Die vorstehend genannten Merkmale der erfindungsgemäßen Tür weisen im wesentlichen einen ganz neuen Aufbau einer faltbaren Tür gegenüber den bekannten Konstruktionen auf, so daß auch die großflächigen Türabschnitte präzise geführt und zuverlässig gehandhabt werden können. So ist beispielsweise für die zuverlässige Führung unten an der Untertür ein Führungsstift vorgesehen, der in einer Führungsnut bewegt werden kann, die sich seitlich der durch die faltbare Tür abzudeckenden Öffnung vertikal von unten nach oben erstreckt. Dadurch wird die Unterkante der Untertür auf einem genau vorgegebenen Weg beim Öffnen und Schließen vertikal sauber geführt. Dadurch wiederum wird eine Verkantung der horizontalen Drehachse oben an der Obertür vermieden, weil verschränkende Bewegungen an den Lagerteilen im Halter der Obertür abgefangen werden.

Es ist vorstellbar, daß die Seitenkante der Untertür wenigstens im inneren Bereich sich innerhalb der vertikalen Kanten der Öffnung befindet, so daß im unteren Bereich der Untertür ein Führungsstift seitlich um 5 bis 40 mm, vorzugsweise 15 bis 25 mm, horizontal sich so erstreckt, daß er gerade in der Führungsnut verläuft. Ein solcher Führungsstift kann aus Metall oder Kunststoff bestehen und mit geringer Reibung in einer entsprechend aus Kunststoff oder Metall ausgebildeten Führungsnut gleiten. Vorstellbar ist aber auch eine Rollbewegung oder ein anderes Mittel zur weiteren Verringerung der Reibung des Führungsstiftes bei seiner Bewegung in der Nut. Durch seinen Eingriff in der Führungsnut wird der Führungsstift nicht nur horizontal gegenüber unkontrollierten Bewegungen nach außen oder innen gehalten, d.h. wenn der Benutzer vor dem betreffenden Maschinengehäuse steht und von außen senkrecht auf die geschlossene Tür blickt; sondern der Führungsstift wird auch senkrecht dazu horizontal zur Seite gehalten, wodurch die Unterkante der Untertür präzise geführt wird.

Für eine zuverlässige Handhabung sind erfindungsgemäß Mittel vorgesehen, um die faltbare Tür leichtgängig auszugestalten. Ein einfacher Aufbau und geringe Reibung tragen zur Verlängerung der Lebensdauer und damit einer zuverlässigen Handhabung bei, denn der Benutzer braucht lediglich einen an der faltbaren Tür angebrachten Griff anzufassen und zum Öffnen nach vorn und oben zu ziehen oder zum Schließen in entgegengesetzte Richtungen zu bewegen. Die Verwendung von Gasfedern ist an sich zwar bekannt, insbesondere aber nur für die Betätigung von einseitig angelenkten Klappen, wie z.B. Karosseriehauben an Fahrzeugen und dergleichen. Erfindungsgemäß wird die Gasfeder im unteren Bereich maschinenfest aber drehbar gehaltert und steht mit ihrem oberen Ende mit einem Bolzen in Eingriff, der im Abstand von der Drehachse der Obertür befestigt ist. Diese Befestigung gelingt über noch zu beschreibende Lagerteile, welche von einem Halter gestützt werden. Dieser Halter erstreckt sich vorzugsweise über die gesamte Breite der Obertür, und es ist ferner bevorzugt, an zwei Enden des Halters oder wenigstens in deren Endbereich je ein Lagerteil für je eine Gasfeder vorzusehen. Ein solches Lagerteil kann beispielsweise bei einer bevorzugten Ausführungsform aus einem Doppelblech bestehen, bei welchem wiederum als Beispiel zwei in Seitenansicht dreieckförmige oder trapezförmige Blechteile im Abstand von beispielsweise 5 bis 30 mm, vorzugsweise 10 mm, voneinander so angebracht werden, daß der erwähnte obere Bolzen der Gasfeder von einen Paar von Lagerblechen, die hier auch als Lagerteile bezeichnet werden, gehalten wird.

Eine faltbare Tür mit den vorstehend genannten Merkmalen ist zwar aufgebaut wie eine an sich bekannte Falttür eines Küchenschrankes, dieses Prinzip wird aber erstmalig durch die vorstehenden Merkmale anwendbar bei einer gewerblichen Maschine.

Dadurch, daß also auch Türabschnitte mit großen Feldern und verhältnismäßig großem Gewicht sehr praktisch und zuverlässig betätigt und präzise geführt werden können, ist eine gute Reinigungsmöglichkeit bei geringem Höhenbedarf gewährleistet. Zum Beispiel kann nach dem Auffalten der Tür sowohl der obere als auch der untere Abschnitt derselben mit guter Zugänglichkeit gereinigt werden. Die Rückwand der Untertür ist ebensogut erreichbar wie die der Obertür, wenn die faltbare Tür nach der Erfindung geöffnet ist. Weiterhin kann durch den Einsatz der faltbaren Tür gemäß der Erfindung an Geschirrspülmaschinen in gewerblichen Betrieben auch der Raum über der Waschkammer gereinigt werden. Über dem Waschbereich befindet sich über einer horizontalen Trennwand bei bestimmten Geschirrspülmaschinen ein Abteil mit einem Wärmetauscher mit Kondensator. Diese müssen ab und zu gereinigt werden und waren auch nach dem Öffnen der bisher bekannten einteiligen Schiebetüren nicht zugänglich. Durch die erfindungsgemäße faltbare Tür ist aber die ganze Fläche vor dem Wärmetauscher mit Kondensator offen und kann daher trotz der geringeren Raumhöhe der neuen Tür praktisch gereinigt werden.

Zweckmäßig ist es gemäß der Erfindung ferner, wenn die die Obertür und die Untertür verbindende Dreheinrichtung als Greifnuten aufweisender Türgriff mit zwei relativ zueinander drehbeweglichen Teilstücken ausgestaltet ist. Die faltbare Tür besteht aus dem oberen Abschnitt, der Obertür, und dem unteren Abschnitt, der Untertür, welche beide über eine diese Abschnitte verbindende Dreheinrichtung mit horizontaler Drehachse angelenkt sind. Wenn diese Dreheinrichtung als Griff ausgestaltet ist, kann man wichtige Handhabungsmerkmale mit notwendigen Drehmechanismen direkt verbinden mit dem zusätzlichen Vorteil, daß die Handhabung eines solchen Türgriffes sich dem Benutzer als logisch und überzeugend darbietet. Das Bedienungspersonal wird bei glatten Oberflächen von Ober- und Untertür zum Öffnen die Greifnuten des Türgriffes erfassen und nach vom und oben ziehen, wodurch sofort das erwünschte Zusammenfalten der Tür eingeleitet wird. Dabei weist der erfindungsgemäße Türgriff zwei relativ zueinander bewegliche Teilstücke auf.

Bei weiterer vorteilhafter Ausgestaltung der Erfindung ist nun vorgesehen, daß das erste Teilstück des Türgriffes ein an der Unterkante der Obertür angebrachtes, eine teilzylindermantelförmige Oberfläche aufweisendes Türgriffinnenteil ist und daß das zweite Teilstück des Türgriffes ein an der Oberkante der Untertür angebrachtes, eine komplementäre teilzylindermantelförmige Innenfläche aufweisendes Türgriffaußenteil mit den Greifnuten ist. Ohne die Zylindermantelform der Oberflächen - wenigstens von Teiloberflächen - des ersten Teilstückes mag die faltbare Tür im geschlossenen Zustand zwar außen im wesentlichen glatt sein (bis auf einen Griff), spätestens aber nach dem Zusammenfalten entsteht ein Spalt zwischen dem oberen Teilstück und dem unteren, in welchen beim Schließen das Bedienungspersonal sehr leicht Finger der Hand einführen kann. Diese werden beim Schließen der faltbaren Tür unter Umständen abgequetscht. Zur Vermeidung dieser erheblichen Verletzungsgefahr sind die zuletzt erwähnten Merkmale der Erfindung vorgesehen, durch welche nämlich ein Spalt zwischen dem ersten und dem zweiten Teilstück des Türgriffes mit Sicherheit immer geschlossen bleibt. Es ist also durch die Zylindermantelfläche des ersten Teilstückes, welche direkt gleitend in der komplementären Manteloberfläche des zweiten Teilstückes geführt wird, nicht möglich, eine Hand, Finger oder auch andere Teile einzuführen. Im Gegenteil, sowohl beim Öffnen als auch beim Schließen der faltbaren Tür gemäß der Erfindung sind Außenflächen glatt und ohne Verletzungsgefahr. Daß diese glatten Außenoberflächen die Hygiene einer solchen Maschine verbessern, vergrößert weiter die Vorteile der Anwendung einer Tür gemäß der Erfindung im Lebensmittelbereich.

Günstig ist es erfindungsgemäß, wenn gemäß einer alternativen Ausgestaltung der Dreheinrichtung jedes Teilstück im Querschnitt im wesentlichen die Gestalt eines U hat, wobei die Drehachse des gemeinsamen Drehgelenkes an den äußersten Kanten jeweils eines freien Endes eines Schenkels des U angebracht ist, und wenn neben dem Drehgelenk jedes drehbewegliche Teilstück in einem verankerten Sicherheitspufferteil jeweils mit einer Bodenoberfläche endet derart, daß bei geschlossener Falttür die offenen Bereiche der beiden U aufeinanderzugerichtet sind und die beiden Bodenoberflächen einander berühren. Aus fertigungstechnischen Gründen kann es vorteilhafter sein, anstelle der teilzylindrischen Drehteile solche gemäß der vorstehenden Beschreibung in U-Form im Querschnitt zu verwenden. Zwar würde bei einer solchen Tür nach dem Öffnen, d.h. nach dem Zusammenfalten von Obertür und Untertür, ein Spalt zwischen dem oberen und unteren Teilstück entstehen. Dieser Spalt liegt im Bereich der gemeinsamen Dreheinrichtung, wo die beiden äußersten freien Enden der benachbarten Schenkel der im Querschnitt U-förmigen Dreheinrichtung liegen. An diesen freien Enden wird erfindungsgemäß aber ein Sicherheitspufferteil angebracht, dessen jeweils dem gegenüberliegenden Pufferteil zugewandter Boden in der Position nachgiebig, flexibel oder elastisch derart ist, daß das Bedienungspersonal selbst beim Einführen eines oder mehrerer Finger der Hand deshalb nicht verletzt werden kann, weil dann der Finger das Sicherheitspufferteil deformiert. Durch dieses Pufferteil ergibt sich außerdem der Vorteil einer guten Abdichtung im geschlossenen Zustand der Falttür. Es ist z.B. denkbar, daß das Sicherheitspufferteil aus Gummi oder dergleichen hergestellt ist und jeweils einen Hohlraum umgibt, dessen äußerster oberer Boden eben und dünnwandig ist. Gegenüber dem Hohlraum ist das Sicherheitspufferteil mittels einer schwalbenschwanzförmigen Verankerung im Teilstück des Türgriffes befestigt. Selbstverständlich sind aber auch andere Befestigungsmöglichkeiten denkbar.

Zweckmäßig ist es erfindungsgemäß ferner, wenn die Führungsnut unter Bildung eines L-förmigen Verlaufes an ihrem oberen Ende in ein sich horizontal erstreckendes Ausführstück mündet und wenn im Knickpunkt der L-förmigen Führungsnut eine Entriegelungseinrichtung angeordnet ist. Eingangs wurde festgestellt, daß der auf der rechten und linken unteren Seite der Untertür horizontal und seitlich herausstehende Führungsstift in der Führungsnut wenigstens vertikal bewegbar ist. Dies bedeutet die Führung der Unterkante der Untertür z.B. im Lot nach oben zum Öffnen und nach unten zum Schließen. Teilweise ist aber auch eine Bewegung mit einer horizontalen Komponente dabei, wenn es z.B. zweckmäßig ist, die Führungsnut nicht nur vertikal geradlinig sondern zu Einführzwecken oder für den Beginn und das Einleiten des Öffnungsvorganges auch schräg zum Lot anzuordnen. Während letzteres im unteren Bereich der Führungsnut zweckmäßig sein kann, ist nun das vorstehend erwähnte Ausführstück der Führungsnut im oberen Bereich vorgesehen, wobei insgesamt gesehen die Führungsnut damit L-Form erhält. Der lange Schenkel des L soll dabei der vertikale Hauptteil der Führungsnut sein, während der senkrecht dazu verlaufende kurze Schwenkel des L das Ausführstück darstellt. Dieses mündet frei nach außen, so daß der Führungsstift nach Erreichen des oberen Endes des vertikalen Hauptstückes der Führungsnut umgelenkt wird und senkrecht aus der Führung, in welcher die Führungsnut eingearbeitet ist, herausgenommen werden kann. Dies bedeutet nach dem vollständigen Öffnen beispielsweise einer Waschkammer zusätzlich die Ermöglichung des Zugangs zu einem Bereich oberhalb der Waschkammer, zu dem man nun ohne Schwierigkeiten beispielsweise zu Reinigungszwecken von vorn herangelangen kann, weil die Untertür über ihre Unterkante sozusagen ausgeklinkt und nach vorn herausgeschwenkt werden kann.

Vorausgesetzt wird für diese Ausklinkbewegung der Untertür, daß der Führungsstift tatsächlich über den gesamten L-förmigen Verlauf der Führungsnut bewegt werden kann. Erfindungsgemäß ist aber von Interesse, dieses Ausklinken und Lösen der Untertür von Führungsmitteln nur dann vorzusehen, wenn die Bedienungsperson bewußt eine Entriegelungstätigkeit vornimmt. Hierzu ist nun genau im Knickpunkt der L-förmigen Führungsnut die erwähnte Entriegelungseinrichtung angeordnet. Im Normalfalle ist diese verriegelt und verbietet ein Herausbewegen des Führungsstiftes aus der L-förmigen Führungsnut. Bei Betätigung der Entriegelungsvorrichtung hingegen wird der gesamte L-förmige Weg für den Führungsstift frei, so daß die Untertür ausgeklinkt werden kann.

Vorteilhaft ist es gemäß der Erfindung auch, wenn an der Innenseite der Obertür im Abstand von ihrer Ober- und Unterkante eine vorstehende, sich horizontal über die Breite der Obertür erstreckende Stützleiste angebracht ist. Zwar ist es möglich, auch zwei Stützwinkel im Abstand seitlich anzuordnen, herstellungstechnisch ist es aber einfacher, eine sich über die gesamte Breite der Obertür erstreckende Stützleiste vorzusehen. Diese Stützleiste hat vorzugsweise auf ihrer der Befestigungsseite abgewandten Seite im Querschnitt das Profil eines U und nimmt damit eine Abdichtung, vorzugsweise in Streifenform, auf, so daß im Falle einer Geschirrspülmaschine mit Hilfe dieser Abdichtung aus elastischem Material, wie z.B. Gummi oder Kunststoff, die untere Waschkammer bei geschlossener Tür nach oben hin flüssigkeitsdicht verschlossen ist. Diese Stützleiste mit der vorn in ihr eingelegten Abdichtung hat ferner den Vorteil, daß bei passender Bemessung ihrer Länge der Bewegungsvorgang der faltbaren Tür beim Öffnen durch einen Anschlag begrenzt wird. Will die Bedienungsperson die geschlossene Tür öffnen, dann ergreift sie die Dreheinrichtung über die dort vorgesehenen Greifnuten und faltet die beiden Türabschnitte zusammen, wobei eine Endlage dann erreicht wird, wenn der Führungsstift im oberen Bereich der Führungsnut an gewünschter Position angekommen ist. Wenn in diesem Augenblick, d.h. bei einem vorbestimmten Winkel zwischen Ober- und Untertür, die Stützleiste zwischen Ober- und Untertür in Anschlag kommt, dann fühlt die Bedienungsperson sofort den Anschlag und beendet die Faltbewegung. Wenigstens der untere Bereich der Öffnung des Maschinengehäuses ist dann geöffnet, und nach dem Entriegeln der Entriegelungseinrichtung könnte wahlweise auch der obere Bereich für die Bedienungsperson zugänglich gemacht werden.

Erfindungsgemäß wird der obere Befestigungspunkt der Gasfeder beim Schließen und Öffnen der Tür bezüglich des unteren Befestigungspunktes der Gasfeder in einem Kreisbogen derart geführt, daß in einer Zwischenposition die Gasfeder sich in einer labilen Totstellung befindet, außerhalb deren die Gasfeder die Tür in die geöffnete Position zu drücken versucht. Dieses bedeutet eine Unterstützung der Öffnungsbewegung.

Weitere Vorteile, Merkmale und Ausführungsformen der Erfindung ergeben sich aus der folgenden Beschreibung in Verbindung mit den anliegenden Zeichnungen. Bei diesen zeigen:

Figur 1    schematisch in Seitenansicht die geschlossene Tür, deren Türabschnitte sich neben der sichtbaren vertikalen Führungsnut befinden,

Figur 2    eine Draufsicht auf die geschlossene, faltbare Tür, wenn man in Figur 1 von rechts nach links senkrecht auf das Maschinengehäuse blickt,

Figur 3    die gleiche Ansicht wie Figur 1, wobei die Tür schon teilweise geöffnet ist,

Figur 4    eine weitere Ansicht wie die Figuren 1 und 3, wobei die Tür in der maximal zusammengefalteten Position steht, während die Unterkante der Untertür aber noch durch die Führungsnut gehaltert wird,

Figur 5    die Position der faltbaren Tür, wenn die Untertür nach Ausklinken der Entriegelungseinrichtung und Herausnehmen der Führungsstifte aus dem Ausführstück ganz geöffnet ist,

Figur 6    eine Draufsicht auf die faltbare Tür im Zustand der Figur 5, wenn man in Figur 5 von rechts nach links blickt,

Figur 7    eine ähnliche Ansicht wie Figur 1, jedoch teilweise vergrößert und mit Darstellung einzelner Bauteile der Tür,

Figur 8    eine abgebrochene Ansicht auf die Halterung der Gasfeder mit dem oberen horizontal quer verlaufenden Halter zur Stützung und Führung der Obertür,

Figur 9    eine ähnliche Ansicht wie Figur 7, abgebrochen und in vergrößertem Maßstab zur Darstellung der genaueren Ausgestaltung einzelner Aufbauten der Tür,

Figur 10    eine Querschnittsansicht (in horizontaler Ebene) durch die Führung an den jeweiligen Seiten der mit der Tür zu verschließenden Öffnung,

Figur 11    die Ansicht des in den Figuren 7 und 9 unten zu erkennenden Führungswinkels mit dem Führungsstift,

Figur 12    eine Schnittansicht ähnlich Figur 7, wobei jedoch eine andere Greifeinrichtung mit den Sicherheitspufferteilen vorgesehen ist, und

Figur 13    eine ähnliche Ansicht wie die in Figur 9 oben im Querschnitt dargestellte Dreheinrichtung im geöffneten Zustand der Tür, d.h. wenn die beiden Türteile zusammengefaltet sind, und zwar in der Ausführungsform mit den Sicherheitspufferteilen.

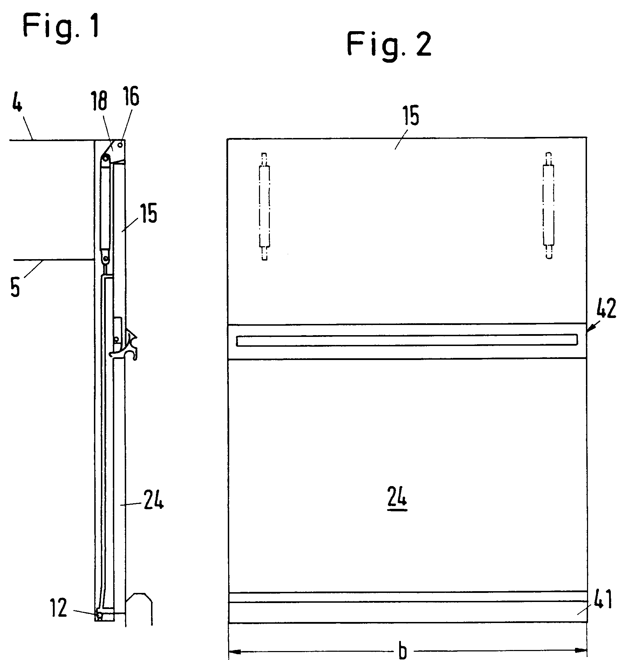

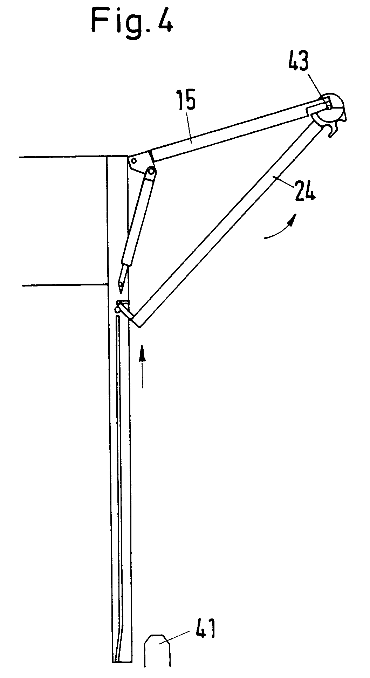

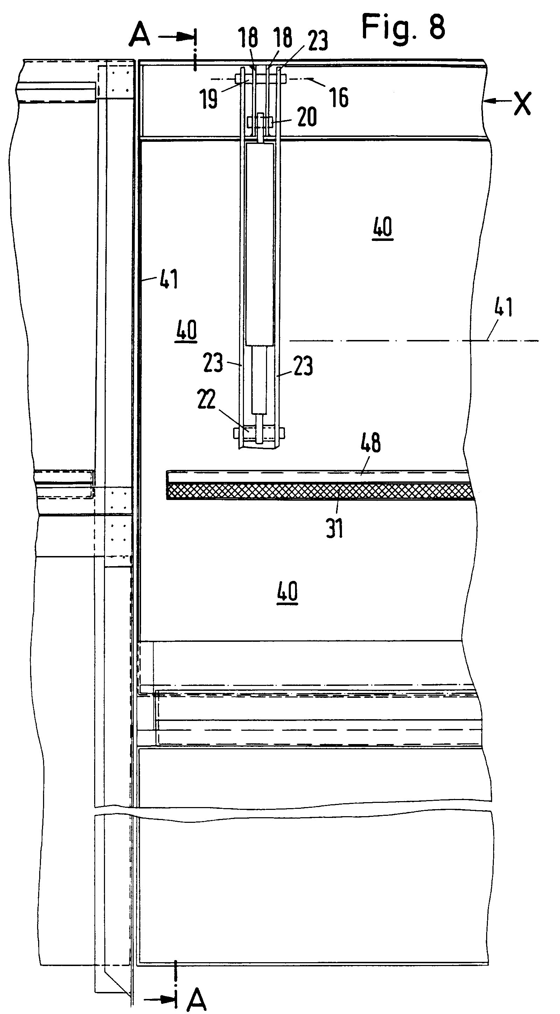

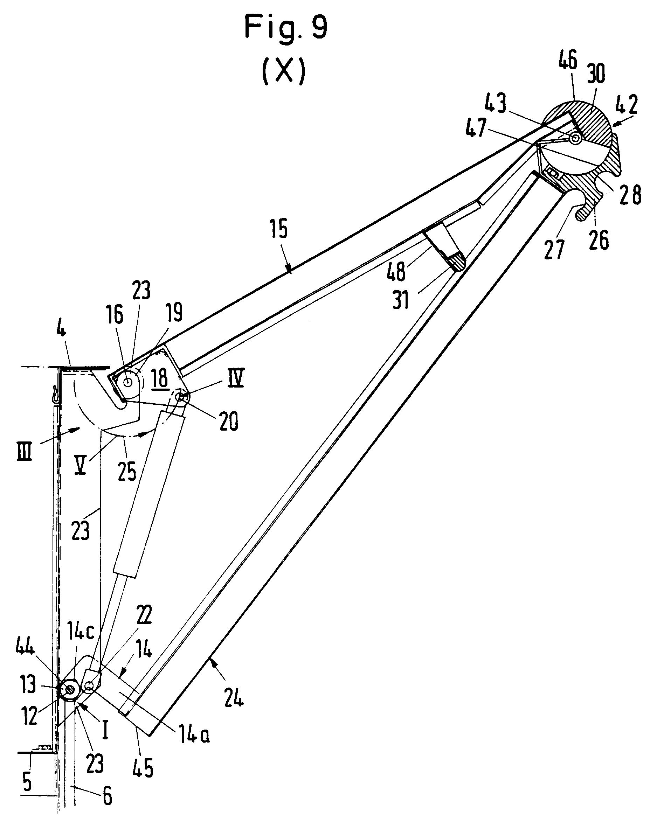

Die in Figur 8 durch die vertikalen und horizontalen Bauteile aufgespannte Öffnung 40 eines Maschinengehäuses 41 ist mit einer faltbaren Tür verschließbar, welche aus einer Obertür 15 und einer Untertür 24 besteht. Diese sind über eine allgemein mit 42 bezeichnete Dreheinrichtung mit horizontaler Drehachse 43 drehbar bzw. bis zu einem gewissen Maße zusammenfaltbar. Ihre gestreckte Position ist in den Figuren 1, 2 und 7 gezeigt, und ihre maximal zusammengefaltete Stellung ist in den Figuren 4 und 9 wiedergegeben. Die gesamte Tür und insbesondere die Obertür 15 ist um eine horizontale maschinenfeste Drehachse 16 drehbar.

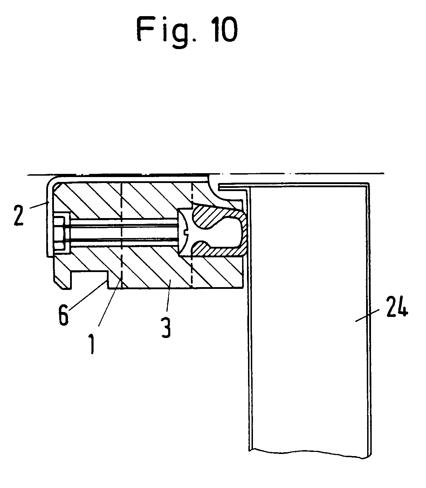

Legt man eine horizontale Schnittebene durch die geschlossene Untertür 24 und betrachtet man dann beispielsweise die rechte Strebe des Maschinenrahmens 41, dann sieht man herausgeschnitten und abgebrochen Figur 10. Wenn der Betrachter außerhalb der Maschine steht und auf die geschlossene Untertür 24 blickt, sieht er in Figur 10 von rechts nach links. Die Halterung und Führung der Untertür 24 ist bei entsprechender Position der Schnittebene nicht sichtbar. Aus dieser Figur 10 ist aber die Führung 3 aus Kunststoff erkennbar, in der die Führungsnut 6 eingearbeitet ist. Die Kunststoffführung sitzt in einem Haltewinkel 2, welcher über Schraubverbindungen 1 mit dem Maschinenrahmen oder anderen Teilen benachbarter Kammern der Maschine verbunden ist.

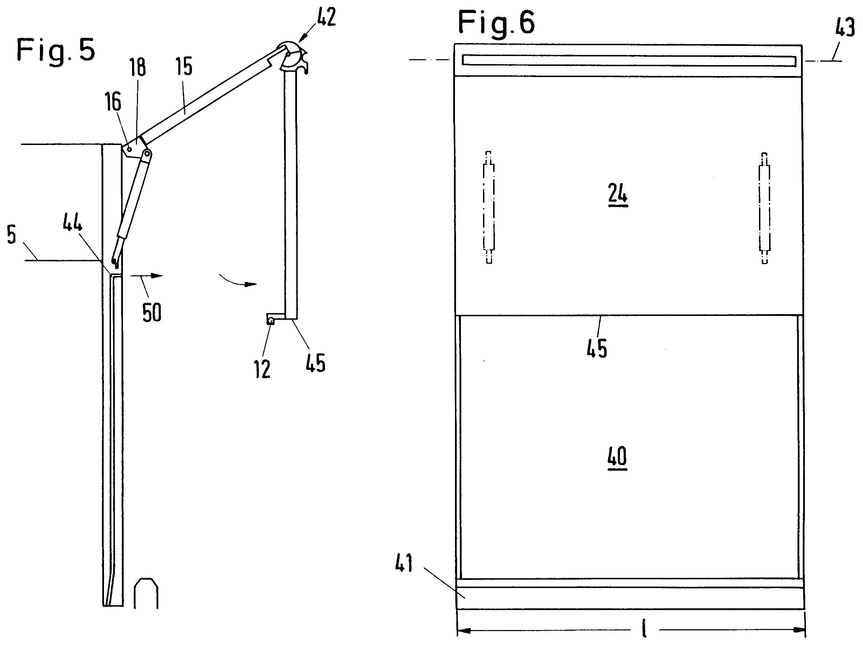

Blickt man in Figur 10 von unten nach oben, dann sieht man auf die Führungsnut, die sich im wesentlichen vertikal von unten nach oben in einer vertikalen Ebene erstreckt, die bei der Betrachtung der Figuren 2 und 6 parallel zur Papierebene und "hinten" der Untertür (und der Obertür) liegt. Diese Führungsnut endet oben in einem Knickpunkt 44, in dessen Zentrum sich bei maximal zusammengefalteter Tür gemäß Figur 9 gerade der Führungsstift 12 befindet.

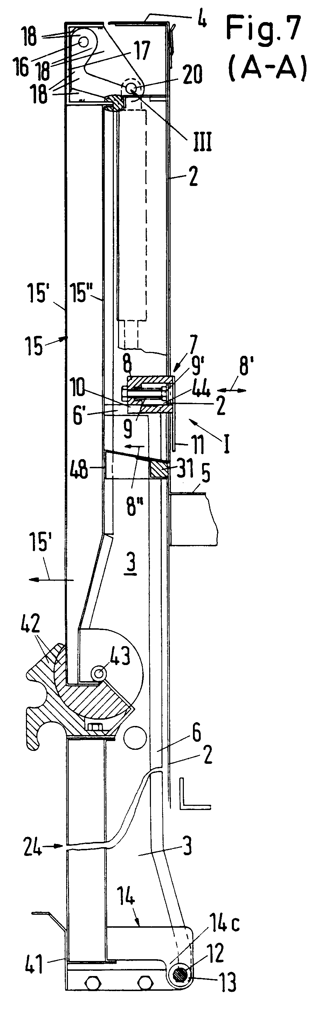

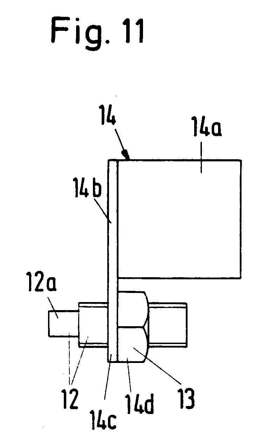

Der Führungsstift 12 ist in den schematischen Darstellungen der Figuren 1 bis 6 am äußersten unteren Ende eines Führungswinkels 14 angebracht gezeichnet, dessen Gestaltung man deutlicher aus Figur 11 sieht. Dieser Führungswinkel 14 besteht aus den Teilen 14a und 14b mit einer unten angesetzten Lasche 14c, in deren Loch ein Führungsstift 12 mit Gewinde durchgesteckt ist. Das Gewinde sorgt für die Verankerung in einer Schweißmutter 13. Außerdem wird nach dem Justieren des Führungsstiftes 12 eine nicht gezeigte Kontermutter aufgeschraubt. Das vordere, verjüngte Ende 12a des Führungsstiftes 12 ist für den Eingriff mit der Führungsnut 6 bestimmt. Der Führungswinkel 14 ist an der Unterseite der Untertür 24 angepunktet, wie man deutlich in Figur 7 erkennt.

An beiden Seiten der Unterkante 45 der Untertür 24 ist ein solcher Führungswinkel 14 angebracht und dient daher der präzisen Führung der Untertür 24, wenn diese von der geöffneten Position in die geschlossene und umgekehrt bewegt wird.

Für die Anlenkung und Drehbeweglichkeit der Obertür 15 um die horizontale Drehachse 16 befindet sich ein an der Oberkante der Obertür 15 horizontal verlaufender Halter 17, den man deutlicher aus den Figuren 7 und 9 mit seinem U-förmigen Querschnittsprofil erkennt. Blickt man in die offene Seite von hinten in diesen U-förmigen Halter 17, dann sieht man den Aufbau der Figur 8 oben. Im Abstand von dem seitlichen Vertikalrahmenteil 41 der Maschine sind zwei maschinenfeste Halterungen 23 angebracht. Diese haben etwa die Länge der Gasfeder 21. Im oberen Bereich, wo der im Querschnitt U-förmige Halter 17 die beiden Schalen 15' und 15'' die zur Temperaturisolierung ausgeschäumt sind, verbindet, befindet sich die auch in Figur 8 deutlich erkennbare horizontale Drehachse 16. Fest mit dem Halter 17 verschweißt und in einem Abstand von z.B. 1 cm voneinander sind Lagerteile 18 in Form von trapezförmigen Lagerblechen angeschweißt. Auch in den Figuren 1, 3 bis 5, 7 und 9 sieht man diese Lagerteile 18 deutlich. Jedes der Lagerteile 18 hat zwei im Abstand voneinander angeordnete Löcher, in deren oberem sich ein langer Bolzen 19 befindet, der die horizontale Drehachse 16 vorgibt, und in deren unterem Loch sich ein kurzer Bolzen 20, nämlich der obere Bolzen für die Gasfeder 21 befindet. Durch diese Anordnung und insbesondere den Abstand zwischen dem Bolzen 19 und dem kurzen Bolzen 20 wird die in Figur 9 gezeigte Drehbewegung des kurzen Bolzens 20 um die horizontale Drehachse 16 ermöglicht. Mit dieser Drehung ist die der Obertür 15 und damit auch der Dreheinrichtung 42 verbunden.

Die Gasfeder 21 ist unten in den maschinenfesten Halterungen 23 befestigt. Dies erfolgt unten über den Bolzen 22 der Gasfeder 21. Gleichzeitig haben die maschinenfesten Halterungen 23 oben auch ein Auge für die Aufnahme des langen Bolzens 19, wie man auch gut in Figur 9 sieht. In dieser ist zu beachten, daß die Gasfeder 21 an der Halterung 23 und nicht etwa am Führungswinkel 14 befestigt ist. Der Führungsstift 12 einerseits und der Bolzen 22 andererseits in Figur 9 sind in verschiedenen Ebenen hintereinanderliegend.

Der durch die Tür zu verschließende und auch zu öffnende Raum in der Maschine besteht aus dem unteren und größeren Waschraum, der sich bis zu einem Bodenblech 5 erstreckt, während die Oberseite der Maschine durch eine Traverse 4 abgeschlossen wird. In den schematischen Figuren sind diese Teile nur als horizontale Linien gezeigt. In Figur 7 und 9 erkennt man den Aufbau und Querschnitt der Traverse 4 deutlicher.

Durch das an dem Knickpunkt 44 der Führungsnut 6 horizontal angesetzte Ausführstück 6' der Führungsnut erhält diese die Form eines L, dessen kurzer Schenkel durch das Ausführstück 6' und dessen langer Schenkel durch die eigentliche, im wesentlichen vertikal verlaufende Führungsnut 6 gebildet ist.

Am Knickpunkt befindet sich die Entriegelungseinrichtung 7. Diese besteht aus einem hohlen Kunststoffteil 8, das gemäß Doppelpfeil 8' durch die auf einem Bolzen 8''' sitzende Feder 9 nach links in Richtung Pfeil 8'' gedrückt wird. Der Bolzen 8''' wird durch die Schweißmutter 9' am Haltewinkel 2 befestigt. In dem Kunststoffteil 8 ist eine Nut 10 eingearbeitet, die aber bei verriegelter Position gemäß Stellung in Figur 7 keine Funktion hat. Vielmehr ist der Knickpunkt 44 durch die Entriegelungseinrichtung 7 besetzt und blockiert. Die Entriegelung erfolgt derart, daß das Kunststoffteil 8 entgegen der Kraft der Feder 9 nach rechts gedrückt wird, wodurch dann die Nut 10 in den Bereich des Knickpunktes 4 derart gelangt, daß die gesamte Führungsnut 6 mit Knickpunkt 44 und Ausführstück 6' frei wird. Auf der Rückseite hinter der Tür 15, 24 und hinter der Führungsnut 6 ist eine Greiflasche 11 an dem Kunststoffteil 8 befestigt, welches man zur Entriegelung der Einrichtung 7 ergreifen und nach rechts drücken kann. Auch Maschinenteile können mit dieser Greiflasche 11 in Eingriff kommen, wenn man durch diese Maschinenteile eine Entriegelung der Einrichtung 7 wünscht. Wird die Greiflasche 11 losgelassen, dann verriegelt sich die Einrichtung 7 sogleich, denn das Kunststoffteil 8 rutscht auf dem Bolzen wieder in die in Figur 7 dargestellte Position zurück.

Die die Obertür 15 und die Untertür 24 verbindende Dreheinrichtung 42 ist als Türgriff ausgestaltet, der (Figuren 7 und 9) aus zwei Teilstücken besteht, nämlich dem Türgriffinnenteil 30 und dem Türgriffaußenteil 26.

Das erste Teilstück, das Türgriffinnenteil 30, ist an der Unterkante der Obertür 15 angebracht und weist eine teilzylindermantelförmige Oberfläche 46 außen auf, welche direkt an einer komplementären teilzylindermantelförmigen Innenfläche 47 des Türgriffaußenteiles 26 gleitet. Dieses zweite Teilstück des Türgriffes, nämlich das Türgriffaußenteil 26, ist an der Oberkante der Untertür 24 angebracht und enthält eine untere Greifnut 27 sowie eine obere Greifnut 28, die beide im Abstand voneinander horizontal über die gesamte Breite b (Figur 2) der Tür verlaufen. Man erkennt, daß sowohl in der Position der Dreheinrichtung 42 der Figur 7 als auch in der Position der Figur 9 nach außen hin keinerlei Spalt geöffnet ist in welchen der Benutzer die Finger seiner Hand versehentlich hereinstecken und beim Schließen verletzen könnte, sondern daß die Oberfläche im wesentlichen glatt oder "geschlossen" ist.

In den Figuren 7 und 9 erkennt man ferner eine sich über die Breite b der Tür erstreckende Stützleiste 48, die im Querschnitt mit einem vorn offenen U derart ausgebildet ist, daß sie eine Abdichtung aus Gummi oder Kunststoff trägt. In der geschlossenen Position der Tür gemäß Figur 7 sieht man, wie diese Kunststoffabdichtung 31 gegen das Bodenblech 5 am oberen Ende der Waschkammer anliegt, so daß auch im Betrieb Spritzwasser nicht über das Bodenblech an einem (nicht vorhandenen) Spalt zwischen Tür und Bodenblech in den Raum oberhalb des Bodenbleches 5 spritzen könnte. Ferner erkennt man bei der Position der Figur 9, daß diese Kunststoffabdichtung 31 gleichzeitig als Anschlag für die maximale Beugeposition der Untertür 24 dient.

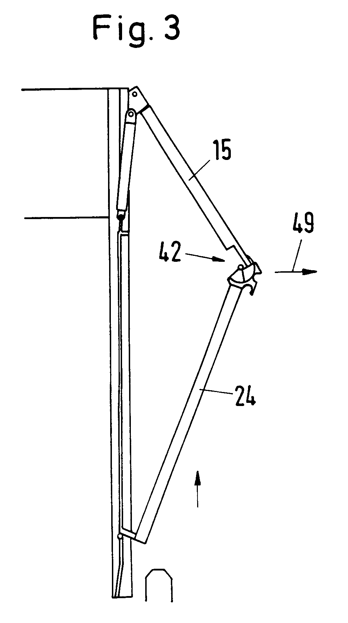

Anhand der Figur 9 kann die Bewegung der faltbaren Tür erläutert werden. Aus der in Figur 7 gezeigten Position bewegt der Benutzer durch Zug der Dreheinrichtung 42 nach rechts in Richtung des Pfeiles 49 (Figur 3) beide Türabschnitte in Richtung auf die zusammengefaltete Position, wobei in Figur 3 eine mittlere Stellung gezeigt ist. Mit Blick auf Figur 9 ist nämlich der obere Bolzen 20 der Gasfeder 21 aus der Ruheposition III längs dem Kreisbogen 25 in die Zwischenposition V der größten Kompression gelangt und bewegt sich nun bei weiterem Ziehen in Richtung des Pfeiles 49 auf die äußere Position IV hin. Zwischen den Positionen V und IV arbeitet die Druckkraft der Gasfeder 21 in Richtung der Unterstützung des Öffnens. Der Führungsstift 12 wird in der Führungsnut 6 nach oben bewegt, wie der Leser beim Vergleich der Figuren 1 und 3 erkennt. Bei weiterer Betätigung der Dreheinrichtung 42 in Richtung Pfeil 49 wird schließlich die Stellung der Figur 4 erreicht, d.h. die Position IV in Figur 9. Jetzt ist die am meisten zusammengefaltete Stellung zwischen Obertür 15 und Untertür 24 erreicht. Diese ist auch in Figur 4 gezeigt. Der Führungsstift 12 ist unter die Entriegelungseinrichtung 7 angefahren und wird dort gehalten. Der Waschraum unter dem Bodenblech 5 ist frei zugänglich.

Das Bodenblech 5 ist aber auch die Wanne eines darüber befindlichen Kondensators, der ab und zu ebenfalls gereinigt werden muß; ebenso wie die innere Rückseite der Untertür 24. Dazu wird die Entriegelungseinrichtung 7 unter Verschieben des Kunststoffteiles 8 entgegen der Kraft der Feder 9 so entriegelt, daß die Nut 10 in den Bereich des Knickpunktes 44 zu liegen kommt, so daß die gesamte L-Form der Führungsnut 6 mit Ausführstück 6' freiliegt. Unter weiterer Streckung der Gasfeder 21 kann man jetzt in Richtung des Pfeiles 50 (Figur 5) die Unterkante 45 der Untertür 24 mit dem Führungsstift 12 aus der Nut bzw. dem Ausführstück 6' herausführen, so daß schließlich die Position der Figur 5 erreicht wird, bei welcher das Feld der Untertür 24 von der Dreheinrichtung 42 im Lot nach unten herunterhängt. Jetzt ist die maximale Dehnung der Gasfeder 21 erreicht.

Der Raum R in der Dreheinrichtung 42 gemäß Figur 9 ist hohl und wird beim Drehen vom Türgriffinnenteil 30 gefüllt, wie man in der Position der Figur 7 erkennt.

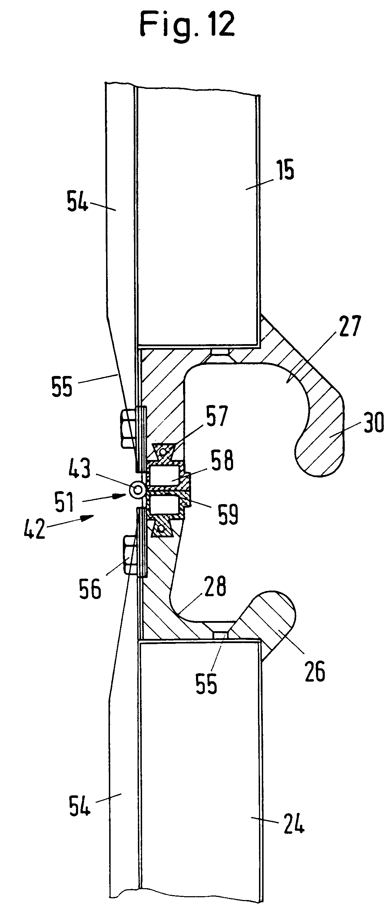

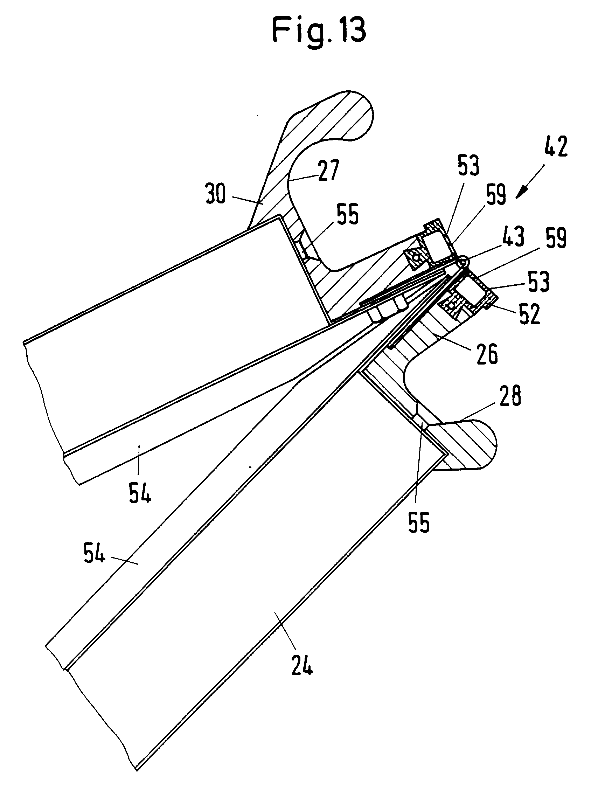

Die zweite Ausführungsform der Dreheinrichtung 42 ist in den Figuren 12 und 13 dargestellt. An der unteren Kante der Obertür 15 ist das eine Teil 30, und direkt benachbart an der Oberkante der Untertür 24 ist das andere Teil 26 aus Kunststoff, Gummi oder dergleichen angebracht. Beide Teile 26, 30 haben im Querschnitt die Gestalt eines U, jedoch mit unterschiedlicher Form, so daß sich im geschlossenen Zustand der Falttür gemäß Figur 12 eine Öffnung ergibt, durch welche der Benutzer Zugang zur unteren Greifnut 27 und auch zur oberen Greifnut 28 hat. An der linken Kante der Querschnittsdarstellung der Figur 12 erkennt man einen Blechfalz 54, mit welchem die beiden Außenwände des Türteiles 15, 24 miteinander verbunden sind, z.B. durch Bördeln. Der Blechfalz 54 läuft über eine Schräge 55 zur Berührungsstelle hin aus, an welcher die gemeinsame Dreheinrichtung 42 mit der Drehachse 43 in Form des Drehgelenkes 51 angebracht ist. Diese Schräge 55 des Blechfalzes 54 erleichtert nämlich das Zusammenfalten der Obertür 15 auf die Untertür 24, wie in der geöffneten Stellung dieser Tür, d.h. abgebrochen im Querschnitt in Figur 13 zusammengefaltet gezeigt ist.

Über eine erste Schraubbefestigung 55 und eine zweite Schraubbefestigung 56 sind die sich über die gesamte Breite der jeweiligen Falttür 15, 24 erstreckenden Teile 26, 30 an der Tür befestigt. Der Benutzer kann also durch Bewegen dieser Teile 26, 30 sowohl die Obertür 15 als auch die Untertür 24 bewegen, etwa wenn er analog zur Darstellung der Figur 3 die Dreheinrichtung 42 in Richtung des Pfeiles 49 zieht. Dabei bewegen sich Obertür 15 und Untertür 24 aus der in Figur 12 dargestellten geschlossenen Position unter Zusammenfalten der beiden Türen 15, 24 in die in Figur 13 gezeigte geöffnete Position, die etwa der der Figur 4 (oben) entspricht.

An den beiden freien Enden der Schenkel der U der Teile 26 und 30, welche sich neben dem gemeinsamen Drehgelenk 51 (Dreheinrichtung 42) im geschlossenen Zustand der Figur 12 berühren und auch im geöffneten Zustand der Figur 13 benachbart angeordnet sind, befinden sich aus Gummi hergestellte Sicherheitspufferteile 52. Diese sind über eine schwalbenschwanzförmige Verankerung 57 am freien Ende des U-Schenkels des Teils 26 bzw. 30 befestigt. Gegenüber dieser Verankerung 57 befindet sich infolge des Hohlraumes 58 innerhalb dieses Sicherheitspufferteiles 52 ein dünnwandiger Boden 59, dessen äußerste Oberfläche 53 im wesentlichen eben ist und im Zustand der Figur 12 (geschlossene Falttür) unter Berührung der gegenüberliegenden Oberfläche des gegenüberliegenden Sicherheitspufferteiles 52 eine gemeinsame Trennoberfläche bildet.

Weil das Sicherheitspufferteil 52 aus einem flexiblen, elastischen, vorzugsweise weichen Gummi hergestellt ist und bei dieser hier dargestellten Ausführungsform einen Hohlraum 58 umschließt und insbesondere einen dünnwandigen Boden 59 hat, dient dieses Sicherheitspufferteil 52 ersichtlich der Vermeidung einer Verletzung. Würde nämlich der Benutzer unachtsam die Tür aus dem Zustand der Figur 13 zu schließen versuchen und einen Finger der Hand zwischen den äußersten Oberflächen 53 der beiden Sicherheitspufferteile 52 belassen, sogar wenn er die Türteile 15, 24 in den geschlossenen Zustand der Figur 12 faltet, dann wird kein Finger verletzt, denn der Hohlraum 58 wird unter Deformierung des dünnwandigen Bodens 59 zusammengestaucht, wobei Finger oder andere Teile der Hand sorgsam geschont sind.

Diese in den Figuren 12 und 13 dargestellte andere Ausführungsform der faltbaren Tür ist nicht nur bei der Benutzung sicher sondern auch besonders preiswert herstellbar, weil die beiden leistenförmigen und im Querschnitt U-förmig ausgestalteten Greifteile 26 und 30 einfacher und besser herstellbar sind.

**Patentansprüche**

1.  Faltbare Tür an der Öffnung (40) eines Maschinengehäuses (41), die aus einer Obertür (15) und einer Untertür (24) besteht, welche über eine diese verbindende Dreheinrichtung (42) mit horizontaler Drehachse (43) wenigstens teilweise zusammenfaltbar sind und von denen die Obertür (15) an ihrem oberen Ende um eine horizontale maschinenfeste Drehachse (16) drehbar ist, dadurch gekennzeichnet, daß an der Unterkante (45) der Untertür (24) auf gegenüberliegenden Seiten je ein sich horizontal erstreckender Führungsstift (12) befestigt ist, der wenigstens vertikal bewegbar in jeweils einer auf gegenüberliegenden Seiten der Öffnung (40) befindlichen Führungsnut (6) in Eingriff steht, die jeweils vertikal in einer von der Unterkante der Öffnung (40) nach oben bis über die Oberkante der Untertür (24) verläuft, wenn die Tür (15, 24) geschlossen ist, und daß an der Oberkante der Obertür (15) ein sich horizontal erstreckender Halter (17) zur Befestigung von Lagerteilen (18) angebracht ist, durch welche an einer ersten Stelle die horizontale Drehachse (16) der Obertür (15) und an einer zweiten beabstandeten Stelle der obere Bolzen (20) einer Gasfeder (21) verlaufen, deren unteres Ende über einen unteren Bolzen (22) drehbar an einer maschinenfesten Halterung (23) angeordnet ist.

2.  Faltbare Tür nach Anspruch 1, dadurch gekennzeichnet, daß die die Obertür (15) und die Untertür (24) verbindende Dreheinrichtung (42) als Greifnuten (27, 28) aufweisender Türgriff mit zwei relativ zueinander drehbeweglichen Teilstücken (30, 26) ausgestaltet ist.

3. Faltbare Tür nach Anspruch 1 oder 2, dadurch gekennzeichnet, daß das erste Teilstück des Türgriffes ein an der Unterkante der Obertür (15) angebrachtes, eine teilzylindermantelförmige Oberfläche (46) aufweisendes Türgriffinnenteil (30) ist und daß das zweite Teilstück des Türgriffes ein an der Oberkante der Untertür (24) angebrachtes, eine komplementäre teilzylindermantelförmige Innenfläche (47) aufweisendes Türgriffaußenteil (26) mit den Greifnuten (27, 28) ist.

4. Faltbare Tür nach Anspruch 1 oder 2, dadurch gekennzeichnet, daß jedes Teilstück (30, 26) im Querschnitt im wesentlichen die Gestalt eines U hat, wobei die Drehachse (43) des gemeinsamen Drehgelenkes (51) an den äußersten Kanten jeweils eines freien Endes eines Schenkels des U angebracht ist, und daß neben dem Drehgelenk (51) jedes drehbewegliche Teilstück (30, 26) in einem verankerten Sicherheitspufferteil (52) jeweils mit einer Bodenoberfläche (53) endet derart, daß bei geschlossener Falttür die offenen Bereiche der beiden U aufeinanderzugerichtet sind und die beiden Bodenoberflächen (53) einander berühren.

5. Faltbare Tür nach einem der Ansprüche 1 bis 4, dadurch gekennzeichnet, daß die Führungsnut (6) unter Bildung eines L-förmigen Verlaufes an ihrem oberen Ende in ein sich horizontal erstreckendes Ausführstück (6') mündet und daß im Knickpunkt (44) der L-förmigen Führungsnut (6, 6') eine Entriegelungseinrichtung (7) angeordnet ist.

6. Faltbare Tür nach einem der Ansprüche 1 bis 5, dadurch gekennzeichnet, daß an der Innenseite der Obertür (15) im Abstand von ihrer Ober- und Unterkante eine vorstehende, sich horizontal über die Breite (b) der Obertür (15) erstreckende Stützleiste (48) angebracht ist.

7. Faltbare Tür nach einem der Ansprüche 1 bis 6, dadurch gekennzeichnet, daß die Entriegelungseinrichtung (7) an der Führungsnut (6, 6') einen in die Verriegelungsrichtung vorgespannten, senkrecht zur Ebene der Öffnung (40) verschiebbaren Gleitkörper (8) mit vorzugsweise daran befestigter Greiflasche (11) aufweist.

# Fig. 1

# Fig. 2

# Fig. 3

# Fig. 4

Fig.6

24

45

40

43

41

l

Fig.5

42

45

12

15

18

16

44

50

5

Fig.7
(A-A)

# Fig. 8

# Fig. 9
## (X)

# Fig. 10

# Fig. 11

# Fig. 12

# Fig.13

| ))) | European Patent Office | EUROPEAN SEARCH REPORT | Application Number |

EP 92 10 0328

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | WO-A-8 903 192 ( KAMPRI ACTIEBOLAG) <br> * figure 1 * <br> --- | 1 | A47L15/42 <br> B60J5/06 |
| A | FR-A-1 589 623 (CARL. METZ G.M.B.H.) <br> * figures 1,2 * <br> --- | 1 | |
| A | DE-U-8 803 889 (COSTA PISANI) <br> * the whole document * <br> --- | 1 | |
| A | EP-A-0 101 416 (A. BREMBILLA) <br> * claims 2,3; figures 1,4 * <br> --- | 1 | |
| A | GB-A-967 796 ( RECKITT & SONS LIMITED) <br> * the whole document * <br> ----- | 1 | |
| | | | TECHNICAL FIELDS SEARCHED (Int. Cl.5 ) <br><br> A47L <br> B60J <br> E06B <br> D06F |

The present search report has been drawn up for all claims

| Place of search | Date of completion of the search | Examiner |
|---|---|---|
| THE HAGUE | 15 JUNE 1992 | KELLNER M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)